# EUROPÄISCHE PATENTSCHRIFT

(11) **EP 2 273 640 B1**
(45) Veröffentlichungstag und Bekanntmachung des Hinweises auf die Patenterteilung: **23.03.2016**
(21) Anmeldenummer: 10006160.5
(22) Anmeldetag: 15.06.2010
(51) Int. Cl.: H02G 3/10

(54) **Geräteträger für Sockelleistenkanäle**
Device for baseboard channels
Support d'outils pour canaux de plinthes à socles

(30) Priorität: 08.07.2009 DE 202009009353 U
(43) Veröffentlichungstag der Anmeldung: 12.01.2011
(73) Patentinhaber: Tehalit GmbH, 67716 Heltersberg (DE)
(72) Erfinder: Schnurr, Richard, 66957 Vinningen (DE); Pfeifer, Christoph, 67707 Schopp (DE)
(74) Vertreter: Nuss, Laurent

(56) Entgegenhaltungen:
- FR-A1- 2 770 047

## Beschreibung

Die vorliegende Erfindung betrifft einen Geräteträger für die Montage von Elektro-Installationsgeräten in Leitungsführungskanälen, insbesondere Sockelleistenkanäle gemäß dem Oberbegriff des Anspruchs 1.

Um Elektro-Installationsgeräte wie z.B. Steckdosen an einen Wandkanal oder Sockelleistenkanal anzubringen, werden spezielle Geräteträger verwendet. Man vergleiche beispielsweise EP 0 159 554 A, EP 0 239 456 A, FR 2 770 047 A oder EP 0 702 442 B.

In allen Fällen besitzt der Geräteträger eine Bodenplatte, die neben dem Sockelleistenkanal an der Wand befestigt wird, wozu in der Bodenplatte Öffnungen vorgesehen sind. Auf der Bodenplatte sind Vorrichtungen vorgesehen, an denen das Elektro-Installationsgerät, welches mit korrespondierenden Einrichtungen versehen ist, befestigt wird. Schließlich besitzt der Geräteträger noch eine Abdeckhaube, die Bodenplatte und Elektro-Installationsgerät abdeckt.

Eine handelsübliche Art von Elektro-Installationsgeräten besitzt ein etwa quaderförmiges Gehäuse mit rechteckigem oder quadratischem Grundriss, an dem bodenseitig sowie radial abstehende Haltelaschen angeformt sind. Zur Befestigung eines solchen Installationsgerätes besitzen die in der FR 27 70 047 A sowie in der EP 0 187 486 A beschriebenen Geräteträger mehrere auf der Bodenplatte befestigte Rasthaken. Der Geräteträger selbst wird über übliche Befestigungsmittel am Kanal bzw. der Wand befestigt.

In der DE 1 690 086 wird ein elektrisches Installationsgerät in wasserdichter Bauart mit einem topfförmigen Gehäuse beschrieben, dessen Geräteeinsatz an Vorsprüngen des Gehäuses geführt ist und der Geräteeinsatz durch hakenförmige elastische Zungen des Gehäuses gesichert ist, die beim Einsetzen des Geräteeinsatzes selbsttätig sich an diesem verrasten. Dieser Geräteträger wird an der Rückseite verschraubt.

Die vorliegenden Lösungen haben gemeinsam, dass der Geräteträger bzw. dessen Grundplatte an die Wand befestigt, z.B. verschraubt werden muss. Dies ist jedoch zeit-und montageaufwändig und daher unbefriedigend. So müssen zunächst Bohrlöcher in die Wand eingebracht und der Geräteträger anschließend befestigt werden. Auch lässt sich der Geräteträger nicht mehr so einfach nach Kundenwünschen entlang des Leitungsführungskanals neu positionieren. Sind die Bohrlöcher erst einmal gesetzt, müssen neue Bohrlöcher an der neuen Position in die Wand eingebracht werden. Eine solche Montage ist sehr aufwändig und erfordert einen Eingriff in die Bausubstanz.

Es ist daher Aufgabe der vorliegenden Erfindung, einen selbsttragenden Geräteträger für die Montage von Elektro-Installationsgeräten in Leitungsführungskanälen, insbesondere Sockelleistenkanälen, anzugeben, der entlang dem Kanalunterteil des Leitungsführungskanals durch einfache Handgriffe in die gewünschte Position verschiebbar und zur Befestigung an den Kanal arretierbar ist, ohne dass Bohrlöcher oder andere Befestigungseinrichtungen für den Geräteträger an der Wand eingebracht werden müssen.

Diese Aufgabe wird gelöst durch einen selbsttragenden Geräteträger mit den Merkmalen des Anspruchs 1. Bevorzugte Ausführungsformen finden sich in den Unteransprüchen wieder.

Der erfindungsgemäße Geräteträger umfasst zum einen ein Basisteil, das aus einem Halterahmen und Klemmfüßen zur Aufnahme und Befestigung eines oder mehrerer Elektro-Installationsgeräte besteht. Ferner umfasst der Geräteträger eine Schürze mit Rastelementen zur Befestigung des Basisteils an das Kanalunterteil eines Leitungsführungskanals. Erfindungsgemäß ist vorgesehen, dass das Basisteil gegenüber dem Kanalunterteil im Montagezustand entweder nach oben oder nach unten versetzt ist. Die Schürze ist hierzu an der Fußseite des Basisteils ausgeformt und überdeckt das Kanalunterteil zumindest teilweise oder vollständig. Die Schürze besitzt erfindungsgemäß wenigstens einen kanalseitig ausgebildeten Rasthaken zur Verrastung der Rückseite der Schürze an eine Kabelführungsrippe des Kanalunterteils von einer Seite (z.B. von oben) sowie eine kanalseitig ausgebildete Arretierungsvorrichtung zur Arretierung der Schürze mit derselben Kabelführungsrippe des Kanalunterteils von der Gegenseite (z.B. von unten). Durch die Arretierung der Schürze wird das Basisteil fest mit dem Kanalunterteil des Leitungsführungskanals verbunden.

Zur Verrastung wird das Basisteil mit der am Fußteil ausgebildeten Schürze zunächst auf das Kanalunterteil angelegt und aufgeclipst. Der Kanal ist hierbei schon an der Wand befestigt. Nach dem Aufclipsen kann der Geräteträger vollständig entlang des Kanalunterteils des Leitungsführungskanals in die gewünschte Montageposition verschoben werden. Nachdem die erwünschte Position gefunden ist, wird das Basisteil über die Schürze mit dem Kanalunterteil über die zuvor erwähnte Arretierungsvorrichtung fest arretiert. In der Arretierungsposition kann das Basisteil mit der Schürze nicht mehr entlang des Kanalunterteils verschoben werden.

Sollte sich der Kundenwunsch ändern, so kann durch das Lösen der Arretierungsvorrichtung die Schürze mit dem Basisteil wieder freigegeben und der Geräteträger in die neue Position entlang des Leitungsführungskanals geschoben werden. Es bleiben hierbei keine unschönen Bohrlöcher oder sonstige Befestigungseinrichtungen an der Wand zurück. Der Monteur kann die Neupositionierung und Montage ohne Werkzeug schnell und einfach lösen und muss sich nicht mit einer zeit- und kostenaufwändigen Befestigung des Geräteträgers auseinandersetzen. Der Montagevorgang wird erheblich erleichtert.

Die Arretierungsvorrichtung besteht in einer ersten Ausführungsform vorzugsweise aus einem Führungszylinder für einen Drehknopf, an dem ein Klemmschenkel ausgebildet ist, der sich in der Arretierungsposition mit der Kabelführungsrippe des Kanalunterteils verklemmt. Vorzugsweise handelt es sich hierbei um einer der obersten Kabelführungsrippen des Kanalunterteils. Der Klemmschenkel ist vorzugsweise asymmetrisch aufgebaut und verläuft in einer Ausnehmung des Führungszylinders. Ferner besitzt er vorzugsweise am Rand eine Schräge, um für die nötige Klemmkraft in der Arretierungsposition zu sorgen. Damit der Drehknopf nicht über die Arretierungsposition hinaus verdreht werden kann, besitzt er vorzugsweise einen seitlichen Rastvorsprung, der mit einer entsprechenden Gegennut an der Schürze des Geräteträgers verrastet. Dadurch wird verhindert, dass sich der Drehknopf wieder versehentlich aus der Arretierungsposition löst.

Zum Verdrehen des Drehknopfes von außen ist vorzugsweise eine Schraubenkopfgeometrie (z.B. Kreuzschlitz) vorgesehen, mit der der Drehknopf leicht mit einem Schraubwerkzeug in die Arretierungsposition gedreht werden kann. In einer weiteren Ausführungsform ist an einem Stift des Drehknopfes ein Gewinde ausgebildet, das dafür sorgt, dass der Drehknopf in die gewünschte Arretierungsposition hineingedreht wird. Wenn der Klemmschenkel sich mit dem Ende der Kabelführungsrippe verklemmt, so wird diese in zwei Richtungen verformt und der Geräteträger damit arretiert. Die Arretierung erfolgt sowohl durch das Verklemmen mit der Kabelführungsrippe als auch durch deren Verformung.

In einer alternativen Ausführungsform umfasst die Arretierungsvorrichtung einen Schneidkeil, der sich in der Arretierungsposition in das Material der Kabelführungsrippe des Kanalunterteils schneidet. Dabei ist der Schneidkeil vorzugsweise über einen Hebel in die Arretierungsposition schwenkbar. Vorzugsweise besteht der Schneidkeil aus einem härteren Material als das Material der Kabelführungsrippe. Der Hebel ist vorzugsweise über eine Achse schwenkbar, welche an der Schürze gelagert ist. Nachdem der Monteur den Geräteträger entlang des Kabelkanals verschoben hat, kann er durch leichtes Hereindrücken des Hebels den Geräteträger in der Arretierungsposition arretieren. Durch die Hebebetätigung wird die Kabelführungsrippe nach unten gedrückt und gleichzeitig eingekerbt, wodurch ein Verrutschen des Geräteträgers entlang des Kanalunterteils vermieden wird.

Die Kabelführungsrippen des Kanalunterteils sind vorzugsweise nach oben angewinkelt, damit die darin verlaufenden Kabel und Leitungen gehalten werden können. Die angewinkelten Kabelführungsrippen sorgen ferner dafür, dass bei der Betätigung des Schneidkeils keine der darin verlaufenden Kabel oder Leitungen beschädigt werden, da die Kabel und Leitungen immer nach innen zum Kanalunterteil gedrückt werden.

Die Enden der Kabelführungsrippen sind als Abschlussleisten ausgebildet. Die Abschlussleisten sind vorzugsweise T-förmig ausgestaltet und verlaufen parallel zur Innenseite des Fußteils. Im Montagezustand stützen sich die Abschlussleisten der Kabelführungsrippen gegen die Innenseite der Schürze ab.

Vorzugsweise ist an der Innenseite der Schürze wenigstens ein Rasthaken ausgebildet, der hinter die Abschlussleiste der Kabelführungsrippe verrastet. Eine weitere Rastnase ist am Kopfteil der Schürze ausgebildet, welche mit dem obersten Schenkel eines Deckelhalteprofils des Kanalunterteils von oben verrastet. Auf diese Weise wird verhindert, dass der Geräteträger mitsamt der installierten Elektro-Installationsgeräte aus dem Kanalunterteil herausgerissen werden kann.

Im Montagezustand ist die Abschlussleiste der oberen Kabelführungsrippe zwischen der Arretierungsvorrichtung und dem Rasthaken verklemmt. Somit ist es für die erfindungsgemäße Funktion ausreichend, wenn ein Rasthaken das T-förmige Ende der Abschlussleiste von unten und die Arretierungsrichtung von oben umklemmt. Natürlich ist für die Funktion auch die umgekehrte Anordnung denkbar, d.h. der Rasthaken befindet sich an der Innenseite der Schürze oben, während sich die Arretierungsvorrichtung unterhalb davon befindet.

In einer weiteren Ausführungsform kann der Drehknopf auch einfach durch eine Schraube ersetzt werden, mit welcher der Geräteträger mit dem Kanalunterteil verschraubt wird.

Vorzugsweise sind das Basisteil und die Schürze einstückig als Formteil ausgebildet. Die Schürze ist hierbei rahmenartig aufgebaut. Gleiches gilt auch für das Basisteil. An der Schürze sind vorzugsweise seitliche Kabelklemmen ausgebildet, damit Kabel oder Leitungen von der untersten Kabelführungsrippe nach oben zum Basisteil mit den darin eingesetzten Elektro-Installationsgeräten geführt werden kann. Gegebenenfalls können die Kabelklemmen Soll-Bruchstellen besitzen.

Nachdem die Elektro-Installationsgeräte in die Geräteaufnahmen des Basisteils eingesetzt worden sind und die Schürze mit dem Kanalunterteil arretiert wurde, können das Basisteil und die Schürze mit einer Haube verrastet werden. Vorzugsweise sind für die Befestigung der Haube an der Unterseite der Schürze Befestigungsöffnungen für Befestigungsarme der Haube ausgebildet. Durch Hereindrücken der beiden Arme kann die Haube freigegeben werden. Durch die Anordnung der Befestigungsöffnungen an der Unterseite der Schürze werden ferner optisch störende Befestigungselemente vertuscht. An der Unterseite sind sie für den Betrachter nicht zu sehen.

In einer weiteren Ausführungsform ist vorgesehen, dass entlang einer Kabelführungsrippe eine Lichtschnur verlaufen kann. Beispielsweise kann es sich um eine LED-Schnur handeln. Wenn der Deckel bzw. ein Teil davon transparent gestaltet wird, kann ein besonderer optischer Eindruck erweckt werden. Dadurch können spezielle Lichteffekte erreicht werden.

Solange der erfindungsgemäße Geräteträger noch nicht an den Wandkanal bzw. Sockelleistenkanal arretiert ist, kann er entlang des Kanals verschoben werden. Es sind keinerlei Änderungen oder neue Bohrungen an der Wand zur Befestigung des Geräteträgers erforderlich. Ändern sich die Kundenwünsche (z.B. bei einer Neuvermietung eines Büroraumes oder Wohnhauses), kann der Geräteträger schnell und ohne großen Montageaufwand durch den Installateur verschoben werden. Auch sind keine baulichen Eingriffe in die Gebäudesubstanz erforderlich. Der erfindungsgemäße Geräteträger ist ferner selbsttragend. Durch die versetzte Anordnung oberhalb oder unterhalb des Kanalunterteils wird eine besonders zweckmäßige Ausnutzung der Installationsfläche ermöglicht. Ferner ragen keine Elektro-Installationsgeräte in das Innere des Kabelführungskanals. Die Gefahr einer Verklemmung der darin verlaufenden Kabel oder Leitungen durch die im Kanal eingesetzten Elektro-Installationsgeräte oder Geräteeinheiten wird vermieden. Leitungen und Geräteeinheiten sind räumlich voneinander getrennt, die Leitungen und Kabel verlaufen im Kanal, während die Geräteeinheiten oder Elektro-Installationsgeräte separat im Basisteil des Geräteträgers untergebracht sind.

Die Erfindung wird in den nachfolgenden Zeichnungen näher erläutert. Es zeigen
- Fig. 1: eine erste Ausführungsform des erfindungsgemäßen Geräteträgers,
- Fig. 2: eine zweite Ausführungsform des erfindungsgemäßen Geräteträgers,
- Fig. 3: eine isometrische Darstellung eines auf einem Kanalunterteil montierten Geräteträgers.

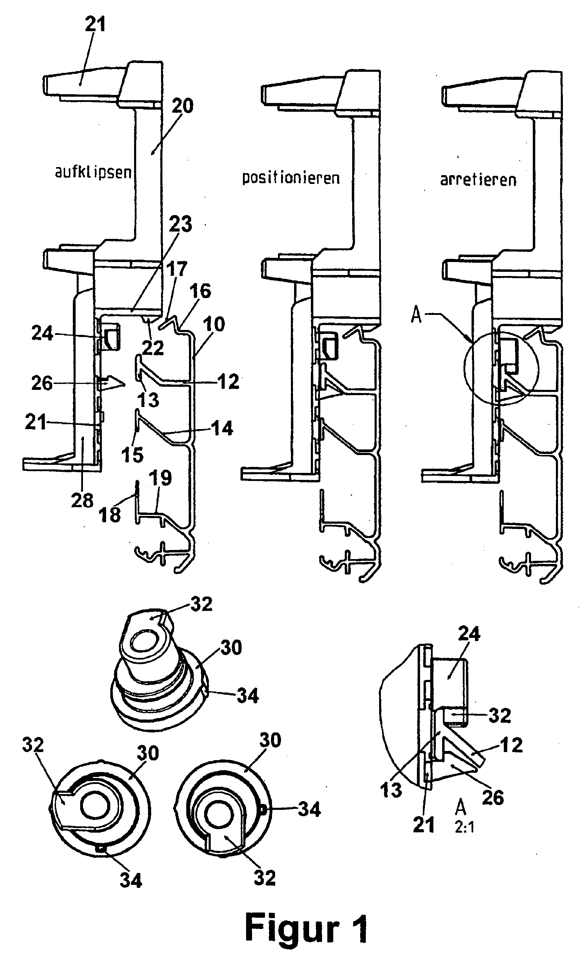

In Fig. 1 erkennt man die Grundelemente des Geräteträgers. Dieser besteht aus einem Basisteil 20, welches aus einem Haltrahmen und Klemmfüßen 21 zur Aufnahme und Befestigung eines oder mehrerer Elektro-Installationsgeräte besteht (linke Darstellung). Am Fußteil des Basisteils 20 ist eine nach unten verlaufende Schürze 28 ausgebildet. An der Innenseite 21 der Schürze 28 erkennt man einen Rasthaken 26 sowie die Arretierungsvorrichtung 24. An der Kopfseite 23 der Schürze 28 ist ferner eine Rastnase 22 ausgebildet.

Zunächst wird die Schürze 28 mit dem Basisteil 20 auf das Kanalunterteil 10 eines Leitungsführungskanals aufgeklipst. Hierbei verrastet die T-förmige Abschlussleiste 13 der Kabelführungsrippe 12, welche senkrecht zum Boden des Kanalunterteils 10 ausgebildet ist, mit dem Rasthaken 26. Die Abschlussleiste 13 verläuft hierbei parallel zur Innenseite 21 der Schürze 28 und stützt sich im Montagezustand gegen die Schürze 28 ab. Über den Rasthaken 26 wird der Geräteträger am Kanalunterteil 10 gehalten. In diesem Zustand ist er entlang des Kanals verschiebbar und kann in die erwünschte Position gebracht werden (mittlere Darstellung). Ist die gewünschte Position gefunden, wird die Schürze über die hier gezeigte Arretierungsvorrichtung mit dem Kanalunterteil 10 arretiert (rechte Darstellung).

Die erfindungsgemäße Arretierungsvorrichtung besteht in der gezeigten Ausführungsform aus einem Führungszylinder 24 mit einer darin eingebrachten Ausnehmung für den Klemmschenkel 32 eines Drehknopfes 30. Der Drehknopf 30 wird in den Führungszylinder 24 eingesetzt. Zur Arretierung wird der Klemmschenkel 32 über den Drehknopf 30 so verdreht, dass der Klemmschenkel 32 hinter der T-förmigen Abschlussleiste 13 verklemmt wird. In der Ausschnittsvergrößerung A ist zu erkennen, wie die Abschlussleiste 13 von unten durch den Rasthaken 26 und von oben durch den Klemmschenkel 32 der Arretierungsvorrichtung verklemmt wird. Der Klemmschenkel 32 erhält vorzugsweise am Rand ausgebildete Schrägen, so dass eine starke Klemmwirkung erreicht wird. Der Geräteträger lässt sich nicht mehr entlang des Kanals verschieben. Zur Arretierung ist ferner ein Rastvorsprung 34 vorgesehen, welcher in eine entsprechende Gegennut greift und verhindert, dass der Drehknopf 30 sich versehentlich wieder aus der Arretierungsposition löst.

Ferner ist zu erkennen, dass die einzelnen Kabelführungsrippen 12, 14, 19 nach oben angewinkelt sind. Dadurch entsteht bei jeder einzelnen Kabelführungsrippe 12, 14, 19 eine Art Mulde, in welche die Kabel oder Leitungen gedrückt werden. Durch die Abwinklung der Kabelführungsrippen 12, 14, 19 wird ferner verhindert, dass die im Kanalunterteil 10 verlaufenden Kabel oder Leitungen durch die Arretierungsvorrichtung beschädigt werden.

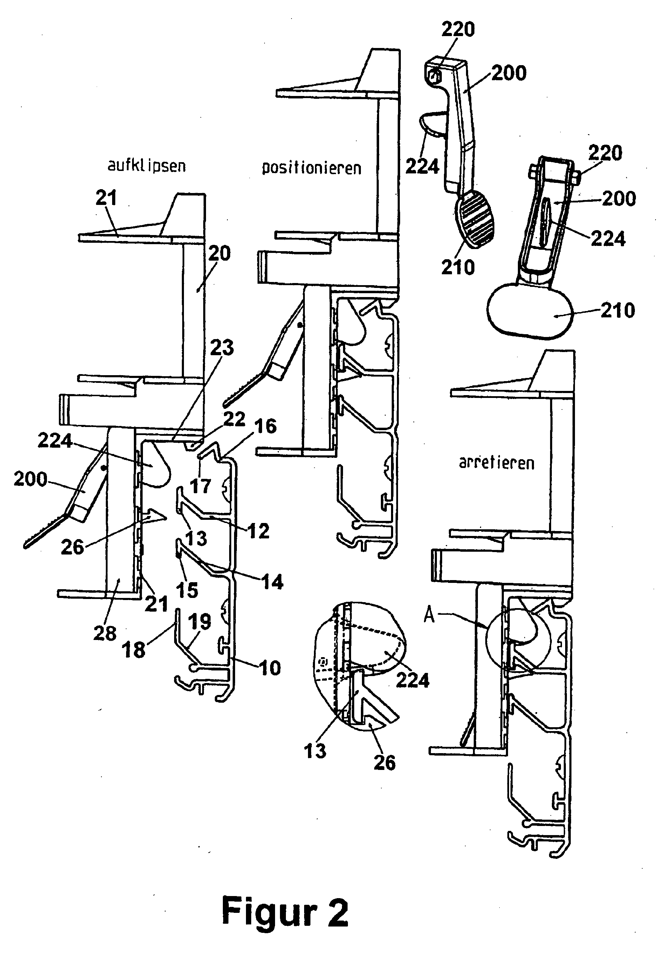

In Fig. 2 ist eine weitere Ausführungsform des erfindungsgemäßen Geräteträgers gezeigt. Diese besteht aus einem Schneidkeil 224, der über einen Hebel 200 schwenkbar ist. Nach dem Aufklipsen wird auch hier der Geräteträger in die gewünschte Position gebracht. Zum Arretieren wird nun der Hebel 200 nach unten gedrückt, wodurch der Schneidkeil 224 die T-förmige Abschlussleiste 13 der Kabelführungsrippe 12 verformt und sich in das Material einschneidet. Deutlich zu sehen ist dies in der Ausschnittsvergrößerung A. Die Abschlussleiste 13 wird von unten mit dem Rasthaken 26 verrastet. Der Schneidkeil 224 schneidet sich von oben in die Abschlussleiste 13 ein.

In der mittleren Darstellung ist ferner zu sehen, wie eine weitere Rastnase 22 sich gegen den obersten Schenkel 17 des Deckelhalteprofils 16 abstützt. Durch den Rasthaken 26 an der Innenseite 21 der Schürze 28 sowie der Rastnase 22 an der Kopfseite 23 der Schürze 28 wird eine ideale Führung des Geräteträgers entlang des Kanals ermöglicht.

Zum Lösen des Geräteträgers wird der Hebel 200 über die Druckfläche 210 nach oben gedrückt, wodurch der Schneidkeil 224 freigegeben wird. Der Geräteträger kann neu positioniert werden.

Der Hebel 200 ist vorzugsweise über eine Achse 220 in der Schürze 28 gelagert.

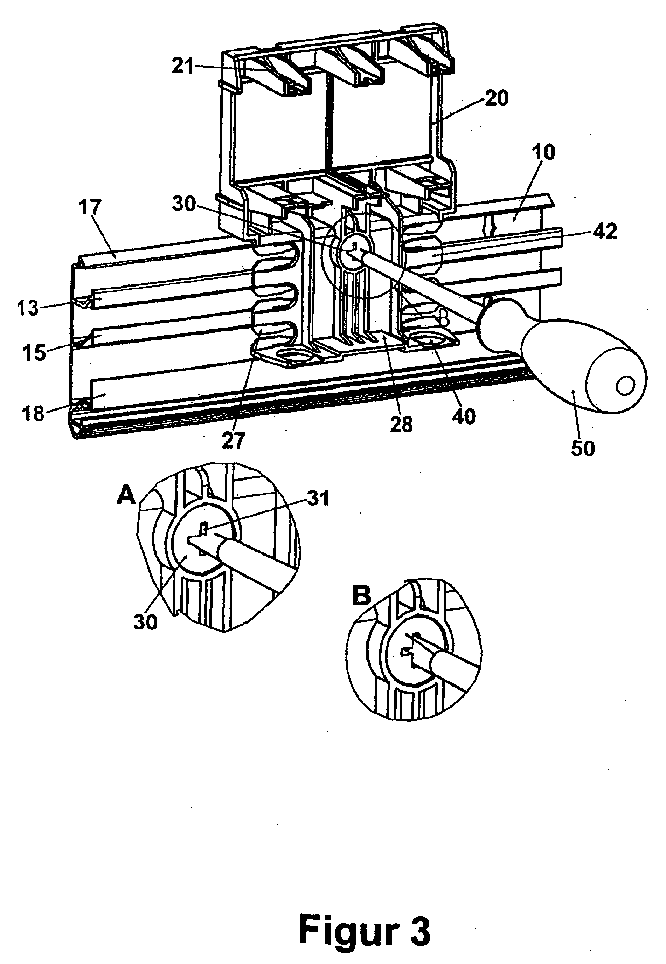

In Fig. 3 ist der Montagezustand gezeigt. Zu sehen ist, wie die Schürze 28 das Kanalunterteil 10 teilweise abdeckt. An der Unterseite befinden sich Befestigungsöffnungen 40, durch welche entsprechende Befestigungsarme einer Haube greifen. An der Schürze 28 sind seitliche Kabelklemmen 27 ausgebildet. Dadurch können Kabel und Leitungen von einer unteren Führungsrippe nach oben zum Basisteil 20 geführt werden, in dem die Elektro-Installationsgeräte eingesetzt sind. Gegebenenfalls können die Kabelklemmen 27 auch über Soll-Bruchstellen verfügen. Deutlich zu sehen ist auch die parallelwandige Ausgestaltung der Abschlussleisten 13, 15, 18 der Kabelführungsrippen. Das Basisteil 20 sitzt auf dem Deckelhalteprofil 17 des Kanalunterteils 10 auf. Die Arretierungsvorrichtung kann über ein Schraubwerkzeug 15 herbeigeführt werden. Der Drehknopf 30 besitzt hierzu eine Werkzeugaufnahme 31, hier gezeigt als Kreuzschlitz. Durch Rechtsdrehung verklemmt sich der Klemmschenkel des Drehknopfes hinter die Abschlussleiste 13 (s. Fig. 1).

Ein wesentlicher Vorteil des erfindungsgemäßen Geräteträgers ist darin zu sehen, dass eine Montage vollständig ohne Werkzeug erfolgen kann. Gleichzeitig kann der Geräteträger entlang des Kanals verschoben werden.

## Patentansprüche

1. Selbsttragender Geräteträger für die Montage von Elektro-Installationsgeräten in Leitungsführungskanälen, insbesondere Sockelleistenkanälen, umfassend
- ein Basisteil (20), bestehend aus einem Halterahmen und Klemmfüßen (21) zur Aufnahme und Befestigung eines oder mehrerer Elektro-Installationsgeräte,
- eine Schürze (28) mit Rastelementen zur Befestigung des Basisteils (20) an das Kanalunterteil (10) eines Leitungsführungskanals,
**gekennzeichnet durch** die Merkmale:
- im Montagezustand ist das Basisteil (20) gegenüber dem Kanalunterteil (10) nach oben oder unten versetzt,
- die Schürze (28):
- ist an der Fußseite des Basisteils (20) ausgeformt,
- überdeckt das Kanalunterteil (10) wenigstens teilweise oder vollständig,
- besitzt wenigstens einen kanalseitig ausgebildeten Rasthaken (26) zur Verrastung der Schürze (28) an eine Kabelführungsrippe (12) des Kanalunterteils (10) von einer Seite sowie
- eine kanalseitig ausgebildete Arretierungsvorrichtung mit Arretierungselementen (24, 30, 224) zur Arretierung der Schürze (28) mit derselben Kabelführungsrippe (12) des Kanalunterteils (10) von der Gegenseite.

2. Geräteträger nach Anspruch 1, **gekennzeichnet durch** die Merkmale:
- die Arretierungsvorrichtung besteht aus einem Führungszylinder (24) für einen Drehknopf (30),
- am Drehknopf (30) ist ein Klemmschenkel (32) ausgebildet, der sich in der Arretierungsposition mit der Kabelführungsrippe (12) des Kanalunterteils (10) verklemmt.

3. Geräteträger nach Anspruch 2, **gekennzeichnet durch** das Merkmal:
- der Klemmschenkel (32) des Drehknopfes (30) ist asymmetrisch aufgebaut und besitzt am Rand eine Schräge.

4. Geräteträger nach einem der Ansprüche 1 bis 3, **gekennzeichnet durch** das Merkmal:
- von außen ist der Drehknopf (30) mit dem Klemmschenkel (32) über ein Schraubwerkzeug (50) in die Arretierungsposition verdrehbar.

5. Geräteträger nach Anspruch 1, **gekennzeichnet durch** die Merkmale:
- die Arretierungsvorrichtung umfasst einen Schneidkeil (224), der sich in der Arretierungsposition in das Material der Kabelführungsrippe (12) des Kanalunterteils (10) schneidet,
- der Schneidkeil (224) ist über einen Hebel (210) in die Arretierungsposition schwenkbar.

6. Geräteträger nach Anspruch 5, **gekennzeichnet durch** die Merkmale:
- der Hebel (210) ist über eine Achse (220) schwenkbar,
- die Achse (220) ist an der Schürze (28) gelagert.

7. Geräteträger nach einem der Ansprüche 1 bis 6, **gekennzeichnet durch** das Merkmal:
- die Kabelführungsrippen (12, 14, 19) des Kanalunterteils (10) sind nach oben angewinkelt.

8. Geräteträger nach Anspruch 7, **gekennzeichnet durch** das Merkmal:
- die Abschlussleisten (13, 14, 18) der Kabelführungsrippen (12, 14, 19) sind T-förmig ausgebildet und verlaufen parallel zur Innenseite (21) des Fußteils (18).

9. Geräteträger nach einem der Ansprüche 1 bis 8, **gekennzeichnet durch** die Merkmale:
- wenigstens ein Rasthaken (26) ist an der Innenseite (21) der Schürze (28) ausgebildet und verrastet hinter die Abschlussleiste (13) der Kabelführungsrippe (12),
- eine weitere Rastnase (22) ist am Kopfteil (23) der Schürze (28) ausgebildet und verrastet mit dem obersten Schenkel (17) des Deckelhalteprofils (16) des Kanalunterteils (10) von oben.

10. Geräteträger nach einem der Ansprüche 1 bis 9, **gekennzeichnet durch** das Merkmal:
- die Abschlussleiste (13) der oberen Kabelführungsrippe (12) ist im Montagezustand zwischen der Arretierungsvorrichtung (24,30,224) und dem Rasthaken (26) verklemmt,
- die Abschlussleisten (13, 15, 18) der Kabelführungsrippen (12,14,19) stützen sich gegen die Innenseite (21) der Schürze (28) ab.

11. Geräteträger nach einem der Ansprüche 1 bis 10, **gekennzeichnet durch** das Merkmal:
- an der Unterseite der Schürze (28) sind Befestigungsöffnungen (40) zur Aufnahme einer Verschlussvorrichtung für eine Haube ausgeformt.

12. Geräteträger nach einem der Ansprüche 1 bis 11, **gekennzeichnet durch** das Merkmal:
- das Basisteil (21) und die Schürze (28) sind einstückig als Formteil ausgebildet.

13. Geräteträger nach einem der Ansprüche 1 bis 12, **gekennzeichnet durch** das Merkmal:
- die Schürze (28) ist rahmenartig aufgebaut.

14. Geräteträger nach einem der Ansprüche 1 bis 13, **gekennzeichnet durch** das Merkmal:
- an der Schürze (28) sind seitliche Kabelklemmen (27) ausgebildet.

15. Geräteträger nach einem der Ansprüche 1 bis 14, **gekennzeichnet durch** das Merkmal:
entlang einer Kabelführungsrippe (12, 14, 19) verläuft eine Lichtschnur.

## Claims

1. Self-supporting device support for mounting electrical installation devices in line guidance ducts, in particular skirting board ducts, comprising
- a base part (20) comprising a retaining frame and clamping feet (21) for receiving and fastening one or more electrical installation devices,
- a skirt (28) with latching elements for fastening the base part (20) to the duct lower part (10) of a line guidance duct,
**characterized by** the following features:
- in the mounted state, the base part (20) is offset upwards or downwards in relation to the duct lower part (10),
- the skirt (28):
- is formed on the foot side of the base part (20) ,
- at least partially or completely covers the duct lower part (10),
- has at least one latching hook (26), which is formed on the duct side, for latching the skirt (28) to a cable guidance rib (12) of the duct lower part (10) from one side, and
- a locking apparatus which is formed on the duct side and has locking elements (24, 30, 224) for locking the skirt (28) to the same cable guidance rib (12) of the duct lower part (10) from the opposite side.

2. Device support according to Claim 1, **characterized by** the following features:
- the locking apparatus comprises a guidance cylinder (24) for a rotary knob (30),
- a clamping limb (32) which is clamped to the cable guidance rib (12) of the duct lower part (10) in the locking position is formed on the rotary knob (30) .

3. Device support according to Claim 2, **characterized by** the following feature:
- the clamping limb (32) of the rotary knob (30) is of asymmetrical construction and has a bevel at the edge.

4. Device support according to one of Claims 1 to 3, **characterized by** the following feature:
- the rotary knob (30) with the clamping limb (32) can be rotated into the locking position by means of a screwdriver (50) from the outside.

5. Device support according to Claim 1, **characterized by** the following features:
- the locking apparatus comprises a cutting wedge (224) which cuts into the material of the cable guidance rib (12) of the duct lower part (10) in the locking position,
- the cutting wedge (224) can be pivoted into the locking position by means of a lever (210).

6. Device support according to Claim 5, **characterized by** the following features:
- the lever (210) can be pivoted by means of a shaft (220),
- the shaft (220) is mounted on the skirt (28).

7. Device support according to one of Claims 1 to 6, **characterized by** the following feature:
- the cable guidance ribs (12, 14, 19) of the duct lower part (10) are angled upwards.

8. Device support according to Claim 7, **characterized by** the following feature:
- the termination strips (13, 14, 18) of the cable guidance ribs (12, 14, 19) are of T-shaped design and run parallel to the inner face (21) of the foot part (18).

9. Device support according to one of Claims 1 to 8, **characterized by** the following features:
- at least one latching hook (26) is formed on the inner face (21) of the skirt (28) and latches behind the termination strip (13) of the cable guidance rib (12),
- a further latching lug (22) is formed on the head part (23) of the skirt (28) and latches with the topmost limb (17) of the cover retaining profile (16) of the duct lower part (10) from above.

10. Device support according to one of Claims 1 to 9, **characterized by** the following features:
- the termination strip (13) of the upper cable guidance rib (12) is clamped between the locking apparatus (24, 30, 224) and the latching hook (26) in the mounted state,
- the termination strips (13, 15, 18) of the cable guidance ribs (12, 14, 19) are supported against the inner face (21) of the skirt (28).

11. Device support according to one of Claims 1 to 10, **characterized by** the following feature:
- fastening openings (40) for receiving a closure apparatus for a hood are formed on the lower face of the skirt (28).

12. Device support according to one of Claims 1 to 11, **characterized by** the following feature:
- the base part (21) and the skirt (28) are integrally formed as a shaped part.

13. Device support according to one of Claims 1 to 12, **characterized by** the following feature:
- the skirt (28) is of frame-like construction.

14. Device support according to one of Claims 1 to 13, **characterized by** the following feature:
- lateral cable clamps (27) are formed on the skirt (28) .

15. Device support according to one of Claims 1 to 14, **characterized by** the following features:
- a lighting string runs along a cable guidance rib (12, 14, 19).

## Revendications

1. Support d'appareils autoportant pour le montage d'appareils d'installation électrique dans des canalisations de conduite de câbles, en particulier des canalisations de plinthes, comprenant
- une partie de base (20), constituée d'un cadre de support et de pieds de serrage (21) pour le logement et la fixation d'un ou plusieurs appareils d'installation électrique,
- une jupe (28) avec des éléments d'encliquetage pour la fixation de la partie de base (20) à la partie inférieure de canalisation (10) d'une canalisation de conduite de câbles,
**caractérisé en ce que** :
- dans la position de montage, la partie de base (20) est décalée vers le haut ou le bas par rapport à la partie inférieure de canalisation (10),
- la jupe (28) :
- est formée du côté du pied de la partie de base (20),
- recouvre la partie inférieure de canalisation (10) au moins en partie ou en totalité,
- possède au moins un crochet d'encliquetage (26) formé du côté canalisation pour l'encliquetage de la jupe (28) sur une nervure de guidage de câbles (12) de la partie inférieure de canalisation (10) depuis un côté et
- un dispositif d'arrêt formé côté canalisation avec des éléments d'arrêt (24, 30, 224) pour l'arrêt de la jupe (28) par la même nervure de guidage de câbles (12) de la partie inférieure de canalisation (10) depuis le côté opposé.

2. Support d'appareils selon la revendication 1, **caractérisé en ce que** :
- le dispositif d'arrêt est constitué d'un cylindre de guidage (24) pour un bouton rotatif (30),
- sur le bouton rotatif (30) est formée une branche de serrage (32) qui, dans la position d'arrêt, se coince avec la nervure de guidage de câbles (12) de la partie inférieure de canalisation (10).

3. Support d'appareils selon la revendication 2, **caractérisé en ce que** :
- la branche de serrage (32) du bouton rotatif (30) est asymétrique et possède un chanfrein au bord.

4. Support d'appareils selon l'une des revendications 1 à 3, **caractérisé en ce que** :
- le bouton rotatif (30) avec la branche de serrage (32) peut être tourné dans la position d'arrêt depuis l'extérieur au moyen d'un outil de vissage (50).

5. Support d'appareils selon la revendication 1, **caractérisé en ce que** :
- le dispositif d'arrêt comprend un coin taillant (224) qui, dans la position d'arrêt, entaille le matériau de la nervure de guidage de câbles (12) de la partie inférieure de canalisation (10),
- le coin taillant (224) peut être amené dans la position d'arrêt par pivotement au moyen d'un levier (210).

6. Support d'appareils selon la revendication 5, **caractérisé en ce que** :
- le levier (210) peut pivoter autour d'un axe (220),
- l'axe (220) est monté sur la jupe (28).

7. Support d'appareils selon l'une des revendications 1 à 6, **caractérisé en ce que** :
- les nervures de guidage de câbles (12, 14, 19) de la partie inférieure de canalisation (10) sont coudées vers le haut.

8. Support d'appareils selon la revendication 7, **caractérisé en ce que** :
- les baguettes terminales (13, 14, 18) des nervures de guidage de câbles (12, 14, 19) sont en forme de T et s'étendent parallèlement au côté intérieur (21) de la partie pied (18).

9. Support d'appareils selon l'une des revendications 1 à 8, **caractérisé en ce que** :
- au moins un crochet d'encliquetage (26) est formé sur le côté intérieur (21) de la jupe (28) et s'encliquette derrière la baguette terminale (13) de la nervure de guidage de câbles (12),
- un autre ergot d'encliquetage (22) est formé sur la partie tête (23) de la jupe (28) et s'encliquette par le haut avec la branche supérieure (17) du profil de fixation de couvercle (16) de la partie inférieure de canalisation (10).

10. Support d'appareils selon l'une des revendications 1 à 9, **caractérisé en ce que** :
- la baguette terminale (13) de la nervure de guidage de câbles supérieure (12) est coincée, dans la position de montage, entre le dispositif d'arrêt (24, 30, 224) et le crochet d'encliquetage (26),
- les baguettes terminales (13, 15, 18) des nervures de guidage de câbles (12, 14, 19) s'appuient contre le côté intérieur (21) de lajupe (28).

11. Support d'appareils selon l'une des revendications 1 à 10, **caractérisé en ce que** :
- des ouvertures de fixation (40) pour la réception d'un dispositif de fermeture pour une coiffe sont formées sur le côté inférieur de la jupe (28).

12. Support d'appareils selon l'une des revendications 1 à 11, **caractérisé en ce que** :
- la partie de base (21) et lajupe (28) sont formées d'une seule pièce moulée.

13. Support d'appareils selon l'une des revendications 1 à 12, **caractérisé en ce que** :
- lajupe (28) est construite à la manière d'un cadre.

14. Support d'appareils selon l'une des revendications 1 à 13, **caractérisé en ce que** :
- des attaches de câble latérales (27) sont formées sur la jupe (28).

15. Support d'appareils selon l'une des revendications 1 à 14, **caractérisé en ce que** :
- un cordon lumineux s'étend le long d'une nervure de guidage de câbles (12, 14,19).
